# EUROPEAN PATENT SPECIFICATION

(11) **EP 4 445 738 B1**
(45) Date of publication and mention of the grant of the patent: **07.10.2026**
(21) Application number: 24169852.1
(22) Date of filing: 12.04.2024
(51) Int. Cl.: A23B 7/055, A23L 27/60, A23B 2/88, A23L 23/00

(54) **METHOD FOR PRODUCING A FROZEN MEAL SALAD**
VERFAHREN ZUR HERSTELLUNG EINES GEFRORENEN SPEISESALATS
PROCÉDÉ DE PRODUCTION D'UNE SALADE ALIMENTAIRE CONGELÉE

(30) Priority: 13.04.2023 BE 202305278
(43) Date of publication of application: 16.10.2024
(73) Proprietor: Darta nv, 8850 Ardooie (BE)
(72) Inventor: TALPE, Andries, 8850 Ardooie (BE)
(74) Representative: Brantsandpatents bv

(56) References cited:
- EP-A1- 0 093 184
- EP-A1- 0 950 355
- EP-A1- 3 037 003
- WO-A1-96/07334

## Description

### TECHNICAL FIELD

The invention relates to the production of a frozen food product, more specifically a main course salad. The method described herein contributes to the shelf life of the food product and its food safety by preventing the growth of food pathogens.

### PRIOR ART

A known problem with the use of ready-made, pre-packaged meals such as main course salads is the limited shelf life of the product. This is often linked to the microbial load of the product. In many cases, the Listeria bacterium is (one of) the cause(s) of food spoilage, as Listeria can grow at refrigerator temperatures. A limited shelf life of a food product not only poses a risk to public health but is also disadvantageous if the ready-to-eat food products need to be further processed into derived products such as fresh salads from, for example, a supermarket, after which they should preferably remain edible for several more days.

Methods of packaging food products to improve their shelf life are generally known. One category of methods that increases the shelf life of packaged products uses preservatives (E numbers) and/or gassing with nitrogen or carbon dioxide. In addition, methods are known that extend the shelf life of food products by, for example, coating frozen fruit salads with fruit juices, as discussed in EP0950355, or by maintaining the bright and fresh color of fresh herbs using an (almost) oxygen-free atmosphere, where the method also includes the use of antioxidants and/or salt, as described in WO9607334. However, finding a solution for improving the shelf life of one type of food product is not always applicable to another type of food product, and combining multiple solutions for extending the shelf life of food products is often not effective or appropriate.

There is therefore still a need for an improved method for the production of ready-to-eat food products that does not use preservatives and that is applicable to a wide variety of ingredients in ready-to-use products, such as the ingredients in main course salads. The present invention aims to find a solution for at least some of the above problems. The inventors of this patent application have developed an improved method for the production of frozen main course salads, where after thawing, perishability is limited. This method includes the following steps: (i) the components or ingredients or raw materials that form the main course salad are frozen in a cryogenic tumbler or other cryogenic mixer, (ii) in the tumbler or mixing device a majority of the components are individually coated with a sauce that has a pH between 2.5 and 5, (iii) the frozen and (partially) coated components are then placed in a package, preferably when leaving the tumbler or mixing device. The end product of this method is defrosted before consumption and does not undergo heating or any other treatment process.

Due to the combination of the pH of the sauce used and the coating procedure, the end product has a pH between 4 and 6, which guarantees a shelf life under refrigerator storage of up to 48 hours or even 72 hours.

### SUMMARY OF THE INVENTION

The invention is in strict conformity with claim 1 and concerns a method for the production of a frozen main course salad, comprising the steps:
a) supplying one or more types of frozen meal components,
b) cooling the frozen meal components to a temperature between -30°C and -40°C in a cryogenic mixer,
c) individually coating at least 90% of the cryogenically frozen meal components from step b) with a sauce in a cryogenic mixer, wherein the sauce has a pH between 2.5 and 5, a salt content between 5 and 15%, and an oil content between 25 and 50%,
d) mixing the partially coated meal components from step c) with further components to form a frozen main course salad, and
e) placing the frozen main course salad in a suitable packaging material under atmospheric conditions,
wherein the frozen main course salad has a pH between 4.0 and 6.0, and a water activity (Aw) between 0.978 and 0.990, where the sauce constitutes 10 to 15% of the main course salad.

According to a further embodiment of the method, the frozen main course salad is then stored in packaging material at a temperature of -18°C or less. According to a further embodiment of the method, the frozen main course salad in the packaging material can be kept for at least 18 months, preferably 24 months, at a temperature of -18°C or less. According to a further embodiment of the method, the frozen main course salad can be kept for at least 48 hours, preferably at least 72 hours, after thawing at refrigerator temperature.

According to another or further embodiment of the method, the sauce comprises olive oil, sunflower oil, agave syrup, white wine vinegar, alcohol vinegar, balsamic vinegar, mustard, lemon juice, and/or garlic, or combinations thereof. The sauce may, for example, further include: flavorings, spices or spice blends, nuts and/or seeds, including mint, salt, celery, pepper, pine nuts, sunflower seeds, pumpkin seeds, basil, oregano, mustard seed, lemongrass, ginger, curry powder, turmeric, fenugreek, cumin, coriander, cumin, allspice, nutmeg, fennel, lovage, chili, lime leaf, wakame, or citrus fiber, or combinations thereof.

According to another or further embodiment of the method, the sauce contains no chemical preservatives.

According to another or further embodiment of the method, the frozen meal components include rice, risoni, pasta, barley, buckwheat, quinoa, chickpeas, peppers, pumpkin seeds, cabbage, soy beans, tomatoes, cucumber, zucchini, kohlrabi, spinach, feta, mozzarella, onion, olives, basil, parsley, hard cheese, peas, beans, broccoli, or a combination thereof.

According to another or further embodiment of the method, at least one type of the supplied frozen meal components is blanched, pre-cooked and/or grilled before supplying the frozen meal components. According to another or further embodiment of the method, the further components from step d) of the method are meal components that are not coated or cannot be coated because they lose their external characteristics if they were combined with a coating, for example, leafy vegetables such as leaf spinach, or broad beans, olives, feta, mozzarella balls, and so on. According to another or further embodiment of the method, the supplied frozen meal components are free of Listeria monocytogenes. According to another or further embodiment of the method, the number of colony-forming units (CFU) of Listeria monocytogenes in the frozen main course salad is lower than 100 CFU/g. According to another or further embodiment of the method, the total aerobic bacterial count at 30°C of a sample of the frozen main course salad is lower than 10⁷ colony-forming units (CFU)/g.

According to another or further embodiment of the method, the frozen main course salad passes a challenge test, in which the frozen main course salad is inoculated with a quantity of Listeria monocytogenes ranging between 50 and 200 colony-forming units (CFU)/g, and in which a growth potential of Listeria monocytogenes is determined over a predetermined storage period, where the growth potential is determined as the difference between the highest concentration of Listeria monocytogenes expressed in log10 CFU/g throughout the storage period and the inoculated quantity of Listeria monocytogenes expressed in log10 CFU/g, where the test is passed if the growth potential is less than or equal to 0.5 log10 CFU/g.

Further, a frozen main course salad obtained by means of one of the embodiments of the method as described herein. is disclosed which is not in accordance with the invention. According to a further embodiment, the main course salad can be kept for at least 48 hours after thawing at refrigerator temperature, preferably at least 72 hours.

### DESCRIPTION OF THE FIGURES

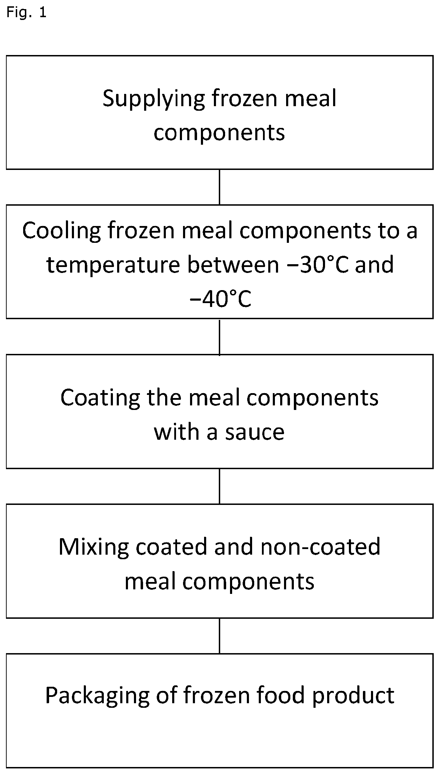

Figure 1 describes the different steps of the method.

### DETAILED DESCRIPTION

The invention concerns a method for the production of a frozen food product that has a shelf life of at least 48 hours, preferably at least 72 hours, after thawing and storage at refrigerator temperatures.

Unless otherwise defined, all terms used in the description of the invention, including technical and scientific terms, have the meanings as commonly understood by a person skilled in the art to which the invention pertains. For a better understanding of the description of the invention, the following terms are explained explicitly.

In this document, "a" and "the" refer to both the singular and the plural, unless the context presupposes otherwise. For example, "a segment" means one or more segments.

When the term "around" or "about" is used in this document with a measurable quantity, a parameter, a duration or moment, and the like, then variations are meant of approx. 20% or less, preferably approx. 10% or less, more preferably approx. 5% or less, even more preferably approx. 1% or less, and even more preferably approx. 0.1% or less than and of the quoted value, insofar as such variations are applicable in the described invention. However, this must be understood to mean that the value of the magnitude where the term "approximately" or "around" is used, is itself specifically disclosed.

The terms "comprise," "comprising," "consist of," "consisting of," "provided with," "have," "having," "include," "including," "contain," "containing" are synonyms and are inclusive or open terms that indicate the presence of what follows, and which do not exclude or prevent the presence of other components, characteristics, elements, members, steps, as known from or disclosed in the prior art.

Quoting numeric intervals by the endpoints includes all integers, fractions, and/or real numbers between the endpoints, including those endpoints.

The invention concerns a method for the production of a frozen food product, comprising the steps: a) supplying one or more types of frozen meal components,b) cooling the frozen meal components to a temperature between -30°C and -40°C in a cryogenic mixer,c) individually coating at least 90% of the cryogenically frozen meal components from step b) with a sauce in a cryogenic mixer, wherein the sauce has a pH between 2.5 and 5, a salt content between 5.0 and 15.0%, and an oil content between 25.0 and 50.0%,d) mixing the partially coated meal components from step c) with further components to form a frozen main course salad, ande) placing the frozen main course salad in a suitable packaging materialunder atmospheric conditions,wherein the frozen main course salad has a pH between 4.0 and 6.0, and a water activity (Aw) between 0.978 and 0.990, where the sauce makes up 10 to 15% of the main course salad in strict conformity with claim 1.

"Food components" means one or more components that the food product contains or from which the food product is formed. "Food components" therefore refer to the raw materials of the food product. In certain embodiments, a food component is an ingredient.

According to a more specific embodiment of the method, step b) provides for the individual coating of at least 91%, 92%, 93%, 94%, 95%, 96%, 97%, 98%, 99% or 100% of the chilled food components with the coating. 100% coating means that all food components are fully or partially coated with the coating. The percentage of the chilled food components coated with the coating has been determined based on the total number of food components present or used.

According to another specific embodiment of the method, step b) provides for individual coating of at least 90%, 91%, 92%, 93%, 94%, 95%, 96%, 97%, 98%, 99% or 100% of the surface of the chilled food components with the coating. 100% coating means that the surface of the individual food component is completely covered with the coating. The percentage of the chilled food components that is coated with the coating is determined on the basis of the coated surface of the food components present or used. According to a further embodiment of the method, the coating has a pH between 2.6 and 4.9, or between 2.7 and 4.8, or between 2.8 and 4.7, or between 2.9 and 4.6, or between 3.0 and 4.5, or between 3.1 and 4.4, or between 3.2 and 4.3, or between 3.3 and 4.2, or between 3.4 and 4.1, or between 3.5 and 4.0, or between 3.6 and 3.9, or between 3.7 and 3.8. According to another embodiment of the method, the coating has a pH between 2.5 and 3.5, or between 2.6 and 3.4, or between 2.7 and 3.3, or between 2.8 and 3.2, or between 2.9 and 3.1 or a pH of approximately 3.0.

According to another or further embodiment of the method, the coating additionally has a salt content between 5.0 and 15.0%. The percentage salt content is calculated based on the total weight or volume, preferably weight, of the coating. According to a more specific embodiment of the method, the coating has a salt content between 7.5 and 15.0%, or a salt content between 5.0 and 12.5%, or a salt content of approximately 10.0%.

According to another or further embodiment of the method, the coating additionally has an oil content of between 20 and 60%. The percentage oil content is calculated based on the total weight or volume, preferably weight, of the coating. According to a more specific embodiment of the method, the coating has an oil content between 20.0 and 55.0%, an oil content between 20.0 and 50.0%, an oil content between 25.0 and 60.0%, an oil content between 25.0 and 50.0%.

According to another or further embodiment of the method, the coating has a salt content between 5.0 and 15.0% and an oil content between 25.0 and 50.0%. The percentage salt content and/or oil content is calculated based on the total weight or volume, preferably weight, of the coating.

According to a more specific embodiment of the method, the coating has a salt content between 7.5 and 12.5% and/or an oil content between 25.0 and 45.0%, or a salt content between 10.0 and 15% and/or an oil content between 30.0 and 40.0%, a salt content of approximately 12.5% and/or an oil content of approximately 35.0%.

According to another embodiment of the method, the coating has a pH between 2.5 and 3.5 and a salt content between 5.0 and 15.0% and/or an oil content between 25.0 and 50.0%, or a pH between 2.6 and 3.4 and a salt content between 5.0 and 15.0% and/or an oil content between 25.0 and 50.0%, or a pH between 2.7 and 3.3 and a salt content between 5.0 and 15.0% and/or an oil content between 25.0 and 50.0%, or a pH between 2.8 and 3.2 and a salt content between 5.0 and 15.0% and/or an oil content between 25.0 and 50.0%, or a pH between 2.9 and 3.1 and a salt content between 5.0 and 10.0% and/or an oil content between 25.0 and 50.0%, or a pH of approximately 3.0 and a salt content between 5.0 and 15.0% and/or an oil content between 25.0 and 50.0%.

According to another or further embodiment of the method, the coating constitutes 10 to 15% of the frozen food product or, in other words, 10 to 15% of the frozen food product consists of coating. The percentage coating is calculated based on the total weight or volume, preferably weight, of the frozen food product.

According to another or further embodiment of the method, the frozen food product has a salt content between 0.5 and 2%. According to another or further embodiment of the method, the frozen food product has an oil content between 2.0 and 6.0%. According to a preferred embodiment of the method, the frozen food product has a salt content between 0.5 and 2%, and an oil content between 2.0 and 6.0%. Percentages are calculated based on the total weight or volume, preferably weight, of the frozen food product.

According to another or further embodiment of the method, the food product is a main course salad.

According to another or further embodiment of the method, the frozen main course salad has a salt content between 0.5 and 2%. According to another or further embodiment of the method, the frozen main course salad has an oil content of between 2.0 and 6.0%. According to a preferred embodiment of the method, the frozen main course salad has a salt content between 0.5 and 2% and an oil content between 2.0 and 6.0%. Percentages are calculated based on the total weight or volume, preferably weight, of the frozen main course salad.

The advantage of the method is, among other things, that a food product or main course salad is formed which has a shelf life of up to 18 months, preferably 24 months, at -18 °C, and after thawing in a refrigerator at refrigerator temperatures can be kept for at least 48 hours, preferably at least 72 hours. The obtained food product or main course salad is consumed cold. Due to this long shelf life, these food products or main course salads can be further processed in dishes such as fresh salads from, for example, a supermarket or a restaurant.

"Refrigerator temperatures" as referred to herein refer to temperatures between 0° and 8° Celsius (C), more specifically between 1° and 7° C, more specifically between 2° and 6° C, more specifically between 3° and 5° C or a temperature of about 4°C.

According to an embodiment of the method, the frozen food product or the frozen main course salad in packaging material is then stored at a temperature of -18°C or less, for example in a freezer.

According to another or further embodiment of the method, the frozen food product or the frozen main course salad in packaging material can be kept for at least 18 months, preferably 24 months at a temperature of -18°C or less, for example in a freezer.

According to an embodiment of the method, the frozen food product or the main course salad can be kept for at least 48 hours, preferably at least 72 hours, after thawing at refrigerator temperature. Preferably, the frozen food product or frozen main course salad is thawed at refrigerator temperatures for 16 hours. Alternatively, the frozen food product or frozen main course salad is defrosted quickly via a controlled defrosting process in a microwave or oven, for example via a MerryChef^{®} defrosting process.

It should be emphasized that the food product or main course salad obtained by one of the embodiments of the method described herein is suitable for consumption without heating it. For this, it is important that the microbial load is kept as low as possible, in order to guarantee the stated shelf life of 48 hours, preferably 72 hours.

Listeria monocytogenes is a pathogenic, Gram-positive, rod-shaped, non-spore-forming bacterium that is the causative agent of listeriosis. Outbreaks of listeriosis are often associated with food because, unlike other bacteria, L. monocytogenes is able to grow at refrigerator temperatures. This characteristic, combined with its ability to form a biofilm, makes control of this pathogen difficult for the food processing industry.

Surprisingly, the inventors found that the current method greatly limits the growth and presence of L. monocytogenes. This also makes it possible to thaw the resulting food product or main course salad but consume it cold without first heating it up or treating it in another way against possible pathogens.

The sauce used as a coating in the embodiments of the method described herein has a pH between 2.5 and 5, a salt content between 5.0 and 15.0%, and an oil content between 25.0 and 50.0%. Surprisingly enough, the inventors found that such a sauce forms an optimal coating that extends the shelf life of the meal components, without negatively affecting the taste of the main course salad. Lowering the pH further, or increasing the salt concentration to extend shelf life, would have a strong negative effect on the taste. Increasing the pH or lowering the salt concentration results in an excessively high microbial load and a related reduced shelf life. In addition, the salt contents and oil contents mentioned result in the desired Aw of the sauce, as will be discussed further.

The inventors further found that between 55 and 100% of the meal components should be coated with this sauce, whereby the surface of each individual meal component is coated at least 90%, 91%, 92%, 93%, 94%, 95%, 96%, 97%, 98%, 99% or 100% to guarantee this shelf life.

According to another or further embodiment of the method, the food components are cooled in a cryogenic mixer.

In a further embodiment of the method, the coating of the food components with the coating or sauce also takes place in a cryogenic mixer.

"Cryogenic" refers to a very low temperature. Cryogenic literally means cooling. Very volatile liquids that boil at a very low temperature are often used for cryogenic applications, for example liquid nitrogen (-196°C) or liquid carbon dioxide. At atmospheric pressure and temperature, these cryogenic liquids largely exist as gas.

Cryogenically freezing preserves the natural quality of the food components. When a product is frozen, ice crystals form. The smaller these crystals are and the more evenly distributed in a product, the better the quality and taste are retained. The best way to ensure that small ice crystals form and are evenly distributed throughout the food product, both inside and outside the cells, is to freeze the product at extremely low or cryogenic temperatures.

A cryogenic mixer refers to a mixer, mixing device or mixing machine that mixes 2 or more components under cryogenic conditions.

According to an embodiment of the method described herein, a cryogenic mixer is a cryogenic tumbler or a tumble cooler. Tumble coolers, or cooling tumblers, are well known in the art of food processing. Individual food components, such as pieces of meat, fish and/or vegetables, are mixed in a tumbler in a drum that rotates about a nearly horizontal axis. During this mixing, the food components may be sprayed with a coolant, either a liquid cryogen, such as nitrogen, or a low-temperature gas, such as carbon dioxide. The liquid cryogen mixes thoroughly with the food components, aided by the tumbling effect of the rotating drum, producing a marked reduction in the temperature of the food components, to cool, freeze or deep-freeze the product as required. Tumblers can be used to cool in batches, in which food is loaded into the tumbler in defined quantities, cooled and then discharged from the tumbler, or they can be arranged as continuous cooling devices in which the food is fed into one side of the cylindrical drum, moves through the drum in an axial direction while it is cooled and then is discharged at the other end of the drum. These two types of tumble coolers are referred to as "batch tumblers" and "continuous tumblers" respectively (the present invention applies to both).

Tumble coolers can also be used to apply a coating to food products. Non-limiting examples of such a coating are flavored oils, sauces, marinades, and so on. A coated food product is obtained by cooling the food product to a temperature substantially below the freezing point of the coating material and then spraying the coating material into the still rotating tumbler and onto the tumbling food product so that the coating material freezes and adheres to the food product. Continuously stirring the food product helps ensure an even coating is applied while preventing clumping of the food product. A typical application is cooling vegetable pieces to a temperature of between -30°C and -40°C for a sauce with a freezing point of -3°C. The sauce is then applied to the vegetables while tumbling (but usually after the spraying with the cryogenic liquid has stopped) until a fairly even layer is achieved.

According to an embodiment of the method, the coating of the food components is carried out by spraying or atomizing the coating on the cryogenically frozen food components. Due to the extremely low temperature of the food components, the coating immediately freezes on the meal components when it comes into contact with the sprayed or atomized coating.

According to a further embodiment of the method, the coating is a sauce. According to a further embodiment, the sauce comprises or contains olive oil, sunflower oil, agave syrup, white wine vinegar, alcohol vinegar, balsamic vinegar, mustard, lemon juice, and/or garlic, or combinations thereof. These foods have been shown to limit the microbial load in foods, and thus extend the shelf life of the food product obtained through the method described herein.

The sauce may, for example, further include: flavorings, spices or spice blends, nuts and/or seeds, including mint, salt, celery, pepper, pine nuts, sunflower seeds, pumpkin seeds, basil, oregano, mustard seed, lemongrass, ginger, curry powder, turmeric, fenugreek, cumin, coriander, cumin, allspice, nutmeg, fennel, lovage, chili, lime leaf, wakame, or citrus fiber, or combinations thereof.

According to an embodiment of the method, the coating or sauce does not contain any chemical preservatives. Non-limiting examples of preservatives are sulfur dioxide (E220) and sulfite (E228).

According to an embodiment of the method, the food components that are cooled in step a) of the method are free of Listeria monocytogenes. A food component is "free of Listeria monocytogenes" when the bacteria are not detected in 25 g of the food component with known current Listeria analyses.

According to European legislation on microbiological food safety, a sample of a food product may not contain more than 100 CFU per gram of sample for the duration of the shelf life of the food product (European Commission 2005 Commission regulation (EC) No 2073/2005). The presence of more than 100 CFU per gram of sample is considered potentially harmful to health.

According to a further embodiment of the method, "free of Listeria monocytogenes" refers to an amount of Listeria monocytogenes that is less than 100 CFU/g, less than 90 CFU/g, less than 80 CFU/g, less than 70 CFU/g, less than 60 CFU/g, less than 50 CFU/g, less than 40 CFU/g, less than 30 CFU/g, less than 20 CFU/g, less than 15 CFU/g, less than 10 CFU/g, less than 5 CFU/g or less than 2 CFU/g.

"CFU" or "cfu" as used herein refers to "colony-forming units." This unit is well known to those skilled in the field of microbiology (as is the methodology for determining the number of colony-forming units) and is used to estimate the number of viable microorganisms such as bacteria in a sample. "Viable" is defined as the ability to reproduce through cell division under controlled conditions. Counting colony-forming units requires culturing the microorganisms where only the viable cells are counted, in contrast to microscopic examination where all cells, living or dead, are counted.

According to a further embodiment of the method, the one or more types of food components are supplied in frozen form before the food components are cooled to a temperature of between -30°C and -40°C.

According to another or further embodiment of the method, at least one type of food component is blanched, pre-cooked and/or grilled before being frozen. This greatly limits the microbial load, including any L. monocytogenes present, resulting in supplied food components containing less than 100 CFU Listeria monocytogenes per gram of sample, or less than 90 CFU/g, less than 80 CFU/g, less than 70 CFU/g, less than 60 CFU/g, less than 50 CFU/g, less than 40 CFU/g, less than 30 CFU/g, less than 20 CFU/g, less than 15 CFU/g, less than 10 CFU/g, less than 5 CFU/g or less than 2 CFU/g. Non-limiting examples of food components that can be blanched, pre-cooked or grilled are vegetables such as peppers and zucchini, or rice and pasta.

According to an embodiment of the method, the frozen food components include rice, risoni, pasta, barley, buckwheat, quinoa, chickpeas, peppers, pumpkin seeds, cabbage, soybeans, tomatoes, cucumber, zucchini, kohlrabi, spinach, feta, mozzarella, onion, olives, basil, parsley, hard cheese, peas, beans, and/or broccoli, or a combination thereof. An advantage of using tomatoes, such as red or yellow cherry tomatoes, is that they have a pH of about 4-4.5. At this pH, Listeria monocytogenes does not grow or grows very slowly.

According to an embodiment of the method, the use of Listeria-sensitive food components is avoided or limited. Examples include peas, corn, root vegetables such as carrots and parsnips, tuber vegetables such as celeriac and radish. These components are known to be good breeding grounds for the growth of Listeria.

According to another or further embodiment of the method, the method contains an additional step wherein the frozen food product is placed in a suitable packaging material under atmospheric conditions. Suitable packaging materials are known to a person skilled in the art. According to an embodiment, a polyethylene is used, preferably low-density polyethylene (LDPE).

According to another or further embodiment of the method, the method contains an additional step in which the partially coated food components are mixed with further components to form a frozen food product before they are placed in a suitable packaging material. These further components are meal components that are not coated or cannot be coated because they lose their external characteristics when combined with a coating, for example leafy vegetables such as leaf spinach, or broad beans, olives, feta, mozzarella balls, and so on.

The resulting frozen food product or main course salad has a pH between 4.0 and 6.0, and a water activity (Aw) between 0.978 and 0.990. The sauce that is coated on the meal components makes up 10 to 15% of the resulting frozen main course salad. The inventors found that such a pH in combination with the water activity is optimal to guarantee the extended shelf life of the main course salad, as well as to limit the microbial load and especially Listeria monocytogenes burden.

According to an embodiment of the method, the frozen food product has a pH between 4.2 and 5.9 and an Aw between 0.979 and 0.989, or a pH between 4.3 and 5.8 and an Aw between 0.980 and 0.988, or a pH between 4.4 and 5.7 and an Aw between 0.981 and 0.987, or a pH between 4.5 and 5.6 and an Aw between 0.982 and 0.986, or a pH between 4.6 and 5.7 and an Aw between 0.983 and 0.985, or a pH between 4.7 and 5.6 and an Aw of approximately 0.984.

According to a specific embodiment of the method, the frozen food product has a pH between 4 and 4.4 and an Aw between 0.978 and 0.990, or a pH of approximately 4.0 and an Aw between 0.978 and 0.990, or a pH of approximately 4.1 and an Aw between 0.978 and 0.990, or a pH of approximately 4.2 and an Aw between 0.978 and 0.990, or a pH of approximately 4.3 and an Aw between 0.978 and 0.990, or a pH of approximately 4.4 and an Aw between 0.978 and 0.990.

"Water activity" or "Aw" or "aw" as used here is a measure of the amount of free water present in a product. "Free water" is all moisture present above the equilibrium moisture content at prevailing relative humidity. By definition, the Aw value of pure water is 1. To measure the Aw of a product, the relative humidity of the air around the product is measured when there is a balance between the product and the air around the product. In other words: the humidity of the air is measured when it no longer extracts moisture from the product or vice versa. The Aw value is determined with a hygrometer.

According to another or further embodiment of the method, the frozen food product or the frozen main course salad has a salt content between 0.5 and 2%, and an oil content between 2.0 and 6.0%. These salt levels and oil levels contribute to the desired Aw of the product or salad.

According to a preferred embodiment, the invention relates to a method for the production of a frozen main course salad, comprising the steps of:
a) cooling one or more types of meal components to a temperature between -30°C and -40°C in a cryogenic mixer,
b) individually coating at least 90% of the cryogenically frozen meal components from the previous step with a sauce in a cryogenic mixer, wherein the sauce has a pH between 2.5 and 5, a salt content between 5.0 and 15.0%, and an oil content between 25.0 and 50.0%,
c) optionally, mixing the partially coated meal components from the previous step with further components into a frozen main course salad, and
d) placing the frozen main course salad in a suitable packaging material under atmospheric conditions,
wherein the frozen main course salad has a pH between 4.0 and 6.0, and a water activity (Aw) between 0.978 and 0.990, where the sauce makes up 10 to 15% of the main course salad.

According to a specific embodiment of the method, step b) provides for the individual coating of at least 90%, 91%, 92%, 93%, 94%, 95%, 96%, 97%, 98%, 99% or 100% of the surface of the cryogenically frozen meal components with the coating. 100% coating means that the surface of the individual meal components is completely covered with the coating. The percentage of the cryogenically frozen that is coated with the coating is determined based on the coated surface of the cryogenically frozen meal components present or used.

According to another or further embodiment of the method, the frozen food product or the frozen main course salad has a salt content between 0.5 and 2%, and an oil content between 2.0 and 6.0%. These salt contents and oil contents contribute to the desired Aw of the product or salad, between 0.978 and 0.990.

According to another or further embodiment of the method, the meal components and/or the produced frozen food product or main course salad contain less than 100 colony-forming units (CFU) of Listeria monocytogenes per gram of sample. According to another or further embodiment of the method, the meal components and/or the produced frozen food product or main course salad contain less than 100, less than 90, less than 80, less than 70, less than 60, less than 50, less than 40, less than 30, less than 20, less than 10, less than 5 or less than 2 colony-forming units (CFU) of Listeria monocytogenes per gram of sample.

According to another or further embodiment of the method, the method contains an additional step in which the total aerobic bacterial count is determined, more specifically at 30°C. The aerobic bacterial count measures the amount of microorganisms in a sample. An aerobic bacterium is a bacterium that requires oxygen for its metabolism, such as Listeria monocytogenes. The analysis of the aerobic bacterial count can be carried out at different temperatures. This depends on the type of product. To determine the aerobic bacterial count, a sample of the product is cultured under aerobic conditions and the colonies formed are usually counted after 3 days of incubation at, for example, 30°C. In addition to vegetative bacteria, aerobic spores, aerobic thermophilic and thermoresistant bacteria can also be determined. An excessive amount of aerobic bacteria in the end product or in the raw materials can pose a risk to food safety and shelf life.

According to a further embodiment of the method, the total aerobic bacterial count at 30°C is lower than 10⁷ colony-forming units (CFU)/g.

According to another or further embodiment of the method, a frozen food product or main course salad is produced that passes a challenge test, wherein the frozen main course salad or frozen food product is inoculated with an amount of Listeria monocytogenes and where a growth potential of Listeria monocytogenes is determined over a predetermined storage period, where the growth potential is determined as the difference between the highest concentration of Listeria monocytogenes expressed in log throughout the storage period and the inoculated amount of Listeria monocytogenes expressed in log, where the test is passed if the growth potential is less than or equal to 0.5 log10 colony-forming units (CFU) of Listeria monocytogenes/g. As standard, the food product is inoculated at a concentration between 50 and 200 CFU/g, more specifically at a concentration of 100 cfu/g. The predetermined storage period was 5 days at 7°C. For more information, please refer to the technical guideline document of the "European Union Reference Laboratory for Listeria monocytogenes" (EURL Lm) for assessing the shelf life of ready-to-eat foods with regard to Listeria monocytogenes, version 4 of 1 July 2021 (http://eurl-listeria.anses.fr).

A challenge study or challenge test or growth test is a test that evaluates the increase in the population of a microorganism (usually classified as a hazard, for example Listeria monocytogenes) in a food that has been artificially inoculated with a known culture of that microorganism and which is analyzed under conditions consistent with its reasonably expected use. These are tests that can be used to determine a growth potential at either a constant temperature or a time/temperature profile (simulation of, for example, a cold chain with interruption). The growth potential is the difference between the ten-part logarithm of the concentration after growth and the ten-part logarithm of the initial concentration (the duration may include the latency phase and/or the exponential phase and/or the stationary phase). Thus, this test is intended to determine whether a ready-to-eat food product can support the growth of Listeria monocytogenes or not during the stated shelf life. When a growth potential of 0.5 log10 cfu/g or less is obtained, the sample is classified as being ready-to-eat foods that do not support the growth of Listeria monocytogenes.

This challenge test showed that the current method leads to a main course salad or food product that can be kept for 48 hours, preferably 72 hours at 7°C (refrigerator temperature).

In a further embodiment, the food product or main course salad, more specifically the frozen food product or the frozen main course salad, can be kept for at least 48 hours, preferably 72 hours, after thawing at refrigerator temperature.

In what follows, the invention is described by way of non-limiting examples illustrating the invention, and which are not intended to and should not be interpreted as limiting the scope of the invention.

### EXAMPLES

### EXAMPLE 1: Production of a frozen main course salad

The various embodiments of the method of the invention described herein consist in producing frozen food products or frozen main course salads in particular, which can be consumed cold after thawing. Here it is crucial that the presence of Listeria monocytogenes is minimized.

The production of the food product or main course salad will preferably only start once all ingredients have been microbiologically tested, more specifically a Listeria test is carried out on the ingredients (or raw materials, food components or meal components). If the ingredients are free of Listeria monocytogenes or the presence of Listeria is below an imposed upper limit, production can start. Certain ingredients that are sensitive to Listeria contamination are used only to a limited extent or completely avoided, such as roots, tubers, corn, etc.

The steps of the method are shown schematically in Figure 1.

The first step consists of deep-freezing the raw materials to a temperature between -30°C and -40°C. The raw materials can be supplied fresh or already frozen. The ingredients are placed in a mixer, more specifically a cryogenic tumbler. Using liquid nitrogen, the ingredients in the tumbler are cooled to a temperature between -30°C and -40°C. In a second step, the ingredients or raw materials are coated with a sauce. The sauce is sprayed into the tumbler for this purpose. Due to the low temperature of the ingredients, the sauce freezes immediately when it comes into contact with the ingredients, resulting in the ingredients being coated with the sauce.

The sauce has a pH between 2.5 and 5 and a salt content between 5.0 and 15.0%. The sauce often contains acidic components such as lemon juice, mustard, white wine vinegar or balsamic vinegar. Olive oil and agave syrup are also commonly used. The sauce contains no preservatives and constitutes approximately 10-15% of the final product. Adding a sauce with a pH lower than 2.5 is not desirable because the end product becomes too acidic and therefore no longer tasty.

The frozen coated ingredients or raw materials are then mixed, possibly with non-coated products, and packaged under atmospheric conditions (LDPE). The end product has a pH between 4.0-6.0, more specifically between 4.0 and 4.4, a salt content between 0.5 and 2%, and an oil content between 2.0 and 6.0%, and has an Aw value between 0.978-0.990. After thawing at refrigerator temperature, the resulting food product or main course salad can be kept for at least 48 hours, preferably 72 hours.

When putting together a salad, the choice of ingredients is taken into account. It is preferable to work with blanched, pre-cooked, or grilled vegetables such as peppers and zucchini. Tomatoes are also often used, they have a pH value between 4.0 and 4.5, which makes it very difficult or impossible for Listeria to grow on them. This has the effect that the pH of the sauce may be in a higher part of the pH range used, e.g., between 3.5 and 5, or that the percentage of sauce may be on the lower side of the pH range used, e.g., between 10 and 12% of the final product.

Peas, corn and carrots are good breeding grounds for Listeria. When used in limited quantities, the pH of the sauce can be adjusted to the low end of the pH range used, e.g., between 2.5 and 4, or the percentage of sauce can be adjusted to the high end of the range used, e.g., between 12 and 15% of the final product.

The percentage of oil in the sauce is usually between 25 and 50% of the total sauce and contributes together with the salt content to the desired Aw of the sauce and is further related to the organoleptic properties of the end product.

### General information salads:

- pH range end product: 4.0 - 6.0
- Aw range end product: 0.978 - 0.990
- % range oil of the coating: 25.0 - 50.0%
- % range oil of the end product: 2.0 - 6.0 %
- % range salt content of the coating: 5.0 - 15.0%
- % range salt content of the end product: 0.5 - 2.0%
- pH range of the coating: 2.5 - 5
- coating is 10-15% of final product
- consume within 48 to 72 hours after thawing

The coating or sauce used has a pH between 2.5 and 5, for example approximately 3, and contains specific components that help to achieve this low pH, such as acetic acid / vinegar, mustard, curry dressing, lemon, honey, etc. The coating does not contain any additives or preservatives. The coating preferably has a low water activity (Aw <1).

Before use, the frozen, coated product should be thawed at refrigerator temperatures and then consumed within 48 hours or 72 hours.

The thawed end product has a pH between 4.0 and 6.0, preferably a pH between 4 and 4.4, a salt content between 0.5 and 2%, and an oil content between 2.0 and 6.0%, and should have a shelf life of at least 48 hours, preferably 72 hours, after thawing.

This shelf life is determined by means of a "challenge test."

### EXAMPLE 2: Listeria challenge test

The shelf life and storage instructions of each type of salad are determined on the basis of a challenge test. If the challenge test shows a poor result, a decision can be made not to continue with the production of a salad.

Before a challenge test can be performed, a pre-test must be performed. This test determines the variability of the physicochemical parameters that may have an influence on the product. The pH and Aw value are examples of this. The determination of these parameters is based on 3 batches, the parameters of each batch are determined in 5 duplicates. Based on the 90% range of the values obtained, it can be tested whether a representative sample is supplied for carrying out the challenge test.

During the challenge test, the salads are inoculated with Listeria monocytogenes, standard at a concentration between 50 and 200 CFU/g, more specifically at a concentration of 100 cfu/g. At a minimum of 5 different times throughout the storage process, here 5 days at 7°C, a count of Listeria monocytogenes is performed, where the start and end time are always included. The other three times are freely selectable. To take into account the variability of the product, the test is performed on 3 different batches or lots.

The growth potential is calculated by taking the difference between the highest concentration of Listeria monocytogenes (expressed in log10 CFU/g) throughout the storage period and the average concentration of Listeria monocytogenes (expressed in log10 CFU/g) of the starting conditions. If the growth potential is less than or equal to 0.5 log10 CFU/g, there is no significant difference between the initial and final concentration and no growth of Listeria monocytogenes can take place.

If the growth potential is greater than 0.5 log10 cfu/g, this means that there is a significant difference between the initial and final concentration and Listeria monocytogenes can grow in the product.

The present invention should not be construed as being limited to the embodiments described above and certain modifications or changes may be added to the examples described without having to re-evaluate the appended claims. which define the invention.

## Claims

1. Method for the production of a frozen main course salad, comprising the steps:
a) supplying one or more types of frozen meal components,
b) cooling the frozen meal components to a temperature between -30°C and -40°C in a cryogenic mixer,
c) individually coating at least 90% of the cryogenically frozen meal components from step b) with a sauce in a cryogenic mixer, wherein the sauce has a pH between 2.5 and 5, a salt content between 5.0 and 15.0%, and an oil content between 25.0 and 50.0%,
d) mixing the partially coated meal components from step c) with further components to form a frozen main course salad, and
e) placing the frozen main course salad in a suitable packaging material under atmospheric conditions,
wherein the frozen main course salad has a pH between 4.0 and 6.0, and a water activity (Aw) between 0.978 and 0.990, where the sauce makes up 10 to 15% of the main course salad.

2. The method according to claim 1, wherein the frozen main course salad in packaging material is subsequently stored at a temperature of -18°C or less.

3. The method according to claim 1 or 2, wherein the frozen main course salad in packaging material has a shelf life of at least 18 months at a temperature of -18°C or less.

4. The method according to any one of the preceding claims, where the frozen main course salad can be kept for at least 48 hours after thawing at refrigerator temperature.

5. The method according to any one of the preceding claims, wherein the sauce comprises olive oil, sunflower oil, agave syrup, white wine vinegar, alcohol vinegar, balsamic vinegar, mustard, lemon juice, and/or garlic, or combinations thereof.

6. The method according to any one of the preceding claims, wherein the sauce contains no chemical preservatives.

7. The method according to any one of the preceding claims, wherein the frozen meal components comprise rice, risoni, pasta, barley, buckwheat, quinoa, chickpeas, peppers, pumpkin seeds, cabbage, soybeans, tomatoes, cucumber, zucchini, kohlrabi, spinach, feta, mozzarella, onion, olives, basil, parsley, hard cheese, peas, beans, broccoli, or a combination thereof.

8. The method according to any one of the preceding claims, wherein at least one type of the supplied frozen meal components was blanched, pre-cooked and/or grilled before supplying the frozen meal components.

9. The method according to any one of the preceding claims, wherein the further components from step d) are meal components that are not coated.

10. The method according to any one of the preceding claims, wherein the supplied frozen meal components are free of Listeria monocytogenes.

11. The method according to any one of the preceding claims, wherein the number of colony-forming units (CFU) of Listeria monocytogenes in the frozen main course salad is less than 100 CFU/g.

12. The method according to any one of the preceding claims, wherein the total aerobic bacterial count at 30°C of a sample of the frozen main course salad is lower than 10⁷ colony-forming units (CFU)/g.

13. The method according to any one of the preceding claims, wherein the frozen main course salad passes a challenge test, wherein the frozen main course salad is inoculated with an amount of Listeria monocytogenes between 50 and 200 colony-forming units (CFU)/g and where a growth potential of Listeria monocytogenes is determined over a predetermined storage period, where the growth potential is determined as the difference between the highest concentration of Listeria monocytogenes expressed in log10 CFU/g throughout the storage period and the inoculated amount of Listeria monocytogenes expressed in log10 CFU/g, where the test is passed if the growth potential is less than or equal to 0.5 log10 CFU/g.

## Patentansprüche

1. Verfahren zur Herstellung eines tiefgekühlten Salats als Hauptgericht, die folgenden Schritte umfassend:
a) Zuführen einer oder mehrerer Arten tiefgekühlter Mahlzeitkomponenten,
b) Kühlen der tiefgekühlten Mahlzeitkomponenten auf eine Temperatur zwischen -30°C und -40°C in einem kryogenen Mixer,
c) einzelnes Überziehen von mindestens 90% der kryogen tiefgekühlten Mahlzeitkomponenten aus Schritt b) mit einer Soße in einem kryogenen Mixer, wobei die Soße einen pH-Wert zwischen 2,5 und 5, einen Salzgehalt zwischen 5,0 und 15,0% und einen Ölgehalt zwischen 25,0 und 50,0% aufweist,
d) Mischen der teilweise überzogenen Mahlzeitkomponenten von Schritt c) mit weiteren Komponenten, um einen tiefgekühlten Salat als Hauptgericht zu bilden, und
e) Platzieren des tiefgekühlten Salats als Hauptgericht in einem geeigneten Verpackungsmaterial unter atmosphärischen Bedingungen,
wobei der tiefgekühlte Salat als Hauptgericht einen pH-Wert zwischen 4,0 und 6,0 und eine Wasseraktivität (Aw) zwischen 0,978 und 0,990 aufweist, wobei die Soße 10 bis 15% des Salats als Hauptgericht ausmacht.

2. Verfahren nach Anspruch 1, wobei der tiefgekühlte Salat als Hauptgericht in dem Verpackungsmaterial nachfolgend bei einer Temperatur von -18°C oder weniger aufbewahrt wird.

3. Verfahren nach Anspruch 1 oder 2, wobei der tiefgekühlte Salat als Hauptgericht in dem Verpackungsmaterial bei einer Temperatur von -18°C oder weniger eine Haltbarkeitsdauer von mindestens 18 Monaten aufweist.

4. Verfahren nach einem der vorhergehenden Ansprüche, wobei der tiefgekühlte Salat als Hauptgericht nach dem Auftauen bei Kühlschranktemperatur mindestens 48 Stunden aufbewahrt werden kann.

5. Verfahren nach einem der vorhergehenden Ansprüche, wobei die Soße Olivenöl, Sonnenblumenöl, Agavendicksaft, Weißweinessig, Branntweinessig, Balsamico, Senf, Zitronensaft und/oder Knoblauch oder Kombinationen daraus umfasst.

6. Verfahren nach einem der vorhergehenden Ansprüche, wobei die Soße keine chemischen Konservierungsstoffe enthält.

7. Verfahren nach einem der vorhergehenden Ansprüche, wobei die tiefgekühlten Mahlzeitkomponenten Reis, Nudelreis, Pasta, Gerste, Buchweizen, Quinoa, Kichererbsen, Paprika, Kürbiskerne, Kohl, Sojabohnen, Tomaten, Gurke, Zucchini, Kohlrabi, Spinat, Feta, Mozzarella, Zwiebel, Oliven, Basilikum, Petersilie, Hartkäse, Erbsen, Bohnen, Brokkoli oder eine Kombination davon umfassen.

8. Verfahren nach einem der vorhergehenden Ansprüche, wobei mindestens eine Art der zugeführten tiefgekühlten Mahlzeitkomponenten vor dem Zuführen der tiefgekühlten Mahlzeitkomponenten blanchiert, vorgekocht und/oder gegrillt wurde.

9. Verfahren nach einem der vorhergehenden Ansprüche, wobei die weiteren Komponenten aus Schritt d) Mahlzeitkomponenten sind, die nicht überzogen werden.

10. Verfahren nach einem der vorhergehenden Ansprüche, wobei die zugeführten tiefgekühlten Mahlzeitkomponenten frei von Listeria monocytogenes sind.

11. Verfahren nach einem der vorhergehenden Ansprüche, wobei die Anzahl der koloniebildenden Einheiten (CFU) von Listeria monocytogenes in dem tiefgekühlten Hauptgerichtsalat kleiner als 100 CFU/g ist.

12. Verfahren nach einem der vorhergehenden Ansprüche, wobei die Gesamtzahl aerober Bakterien einer Probe des tiefgekühlten Salats als Hauptgericht bei 30°C kleiner als 10⁷ koloniebildende Einheiten (CFU)/g ist.

13. Verfahren nach einem der vorhergehenden Ansprüche, wobei der tiefgekühlte Salat als Hauptgericht einen Belastungstest besteht, wobei der tiefgekühlte Salat als Hauptgericht mit einer Menge an Listeria monocytogenes zwischen 50 und 200 koloniebildenden Einheiten (CFU)/g beimpft wird, und wobei das Wachstumspotential der Listeria monocytogenes über eine festgelegte Aufbewahrungsperiode bestimmt wird, wobei das Wachstumspotential als die Differenz zwischen der höchsten Konzentration an Listeria monocytogenes, ausgedrückt in log10 CFU/g in der gesamten Aufbewahrungsperiode, und der geimpften Menge an Listeria monocytogenes, ausgedrückt in log10 CFU/g ist, bestimmt wird, wobei der Test bestanden ist, wenn das Wachstumspotential kleiner als oder gleich 0,5 log10 CFU/g ist.

## Revendications

1. Procédé de préparation d'une salade de plat principal surgelée, comprenant les étapes consistant à:
a) fournir un ou plusieurs types de composants de repas surgelés,
b) refroidir les composants de repas surgelés à une température comprise entre -30°C et -40°C dans un mélangeur cryogénique,
c) enrober individuellement au moins 90% des composants de repas cryogéniquement surgelés issus de l'étape b) avec une sauce dans un mélangeur cryogénique, dans lequel la sauce a un pH compris entre 2,5 et 5, une teneur en sel comprise entre 5,0 et 15,0%, et une teneur en huile comprise entre 25,0 et 50,0%,
d) mélanger les composants de repas partiellement enrobés issus de l'étape c) avec d'autres composants pour former une salade de plat principal surgelée, et
e) placer la salade de plat principal surgelée dans un matériel d'emballage approprié dans des conditions atmosphériques,
dans lequel la salade de plat principal surgelée a un pH compris entre 4,0 et 6,0, et une activité de l'eau (Aw) comprise entre 0,978 et 0,990, la sauce représentant 10 à 15% de la salade de plat principal.

2. Procédé selon la revendication 1, dans lequel la salade de plat principal surgelée dans un matériel d'emballage est ensuite stockée à une température de -18°C ou moins.

3. Procédé selon la revendication 1 ou 2, dans lequel la salade de plat principal surgelée dans un matériel d'emballage a une durée de conservation d'au moins 18 mois à une température de -18°C ou moins.

4. Procédé selon l'une quelconque des revendications précédentes, dans lequel la salade de plat principal surgelée peut être conservée pendant au moins 48 heures après décongélation à la température du réfrigérateur.

5. Procédé selon l'une quelconque des revendications précédentes, dans lequel la sauce comprend de l'huile d'olive, de l'huile de tournesol, du sirop d'agave, du vinaigre de vin blanc, du vinaigre d'alcool, du vinaigre balsamique, de la moutarde, du jus de citron et/ou de l'ail, ou des combinaisons de ceux-ci.

6. Procédé selon l'une quelconque des revendications précédentes, dans lequel la sauce ne contient aucun conservateur chimique.

7. Procédé selon l'une quelconque des revendications précédentes, dans lequel les composants de repas surgelés comprennent du riz, du risoni, des pâtes, de l'orge, du sarrasin, du quinoa, des pois chiches, des poivrons, des graines de citrouille, du chou, du soja, des tomates, du concombre, de la courgette, du chou-rave, des épinards, de la feta, de la mozzarella, de l'oignon, des olives, du basilic, du persil, du fromage à pâte dure, des pois, des haricots, du brocoli ou une combinaison de ceux-ci.

8. Procédé selon l'une quelconque des revendications précédentes, dans lequel au moins un type des composants de repas surgelés fournis a été blanchi, précuit et/ou grillé avant de fournir les composants de repas surgelés.

9. Procédé selon l'une quelconque des revendications précédentes, dans lequel les autres composants issus de l'étape d) sont des composants de repas qui ne sont pas enrobés.

10. Procédé selon l'une quelconque des revendications précédentes, dans lequel les composants de repas surgelés fournis sont exempts de Listeria monocytogenes.

11. Procédé selon l'une quelconque des revendications précédentes, dans lequel le nombre d'unités formant colonies (UFC) de Listeria monocytogenes dans la salade de plat principal surgelée est inférieur à 100 UFC/g.

12. Procédé selon l'une quelconque des revendications précédentes, dans lequel le nombre total de bactéries aérobies à 30°C d'un échantillon de la salade de plat principal surgelée est inférieur à 10⁷ unités formant colonies (UFC)/g.

13. Procédé selon l'une quelconque des revendications précédentes, dans lequel la salade de plat principal surgelée passe un test de provocation, dans lequel la salade de plat principal surgelée se voit inoculer une quantité de Listeria monocytogenes comprise entre 50 et 200 unités formant colonies (UFC)/g et où un potentiel de croissance de Listeria monocytogenes est déterminé sur une période de stockage prédéterminée, où le potentiel de croissance est déterminé comme la différence entre la concentration la plus élevée de Listeria monocytogenes exprimée en log10 UFC/g pendant toute la période de stockage et la quantité inoculée de Listeria monocytogenes exprimée en log10 UFC/g, le test étant réussi si le potentiel de croissance est inférieur ou égal à 0,5 log10 UFC/g.
